# EUROPÄISCHE PATENTSCHRIFT

(11) **EP 2 283 400 B1**
(45) Veröffentlichungstag und Bekanntmachung des Hinweises auf die Patenterteilung: **29.11.2017**
(21) Anmeldenummer: 08773364.8
(22) Anmeldetag: 05.06.2008
(51) Int. Cl.: G05B 19/042, H02J 1/14

(54) **VERFAHREN ZUM BETREIBEN EINES MODULAREN AUTOMATISIERUNGSGERÄTES**
METHOD FOR OPERATING A MODULAR AUTOMATION DEVICE
PROCÉDÉ PERMETTANT DE FAIRE FONCTIONNER UN APPAREIL D'AUTOMATISATION MODULAIRE

(43) Veröffentlichungstag der Anmeldung: 16.02.2011
(73) Patentinhaber: Siemens Aktiengesellschaft, 80333 München (DE)
(72) Erfinder: DOEBRICH, Udo, 76307 Karlsbad (DE); HEIDEL, Roland, 76870 Kandel (DE)
(86) Internationale Anmeldenummer: PCT/EP2008/004503
(87) Internationale Veröffentlichungsnummer: WO 2009/146723

(56) Entgegenhaltungen:
- WO-A1-2004/023624
- WO-A1-2007/037609
- US-A1- 2002 072 868
- NICHOLSON K E ET AL: "Cost effective strategies for industrial electric power management systems" PETROLEUM AND CHEMICAL INDUSTRY CONFERENCE, 1998. INDUSTRY APPLICATION S SOCIETY 45TH ANNUAL INDIANAPOLIS, IN, USA 28-30 SEPT. 1998, NEW YORK, NY, USA,IEEE, US LNKD- DOI:10.1109/PCICON.1998.727975, 28. September 1998 (1998-09-28), Seiten 223-233, XP010312461 ISBN: 978-0-7803-4897-4
- Scott Manson and Saurabh Shah: "Automated power management systems for power consumers with on-site generation" Schweitzer Engineering Laboratories, Inc. Pullman, WA USA 31. Dezember 2006 (2006-12-31), XP002603822 Gefunden im Internet: URL:http://www.selinc.com/WorkArea/linkit. aspx?LinkIdentifier=id&ItemID=3414 [gefunden am 2010-10-07]

## Beschreibung

Die Erfindung betrifft ein Verfahren zum Betreiben eines modularen Automatisierungsgerätes, dessen CPU-Einheit zur Abarbeitung eines Steuerprogramms zum Steuern eines technischen Prozesses vorgesehen ist und dessen Stromversorgungsmodul elektrische Energie verbrauchende Einheiten mit elektrischer Energie versorgt. Darüber hinaus betrifft die Erfindung ein Automatisierungsgerät mit einer CPU-Einheit zur Abarbeitung eines Steuerprogramms zum Steuern eines technischen Prozesses und mit einem Stromversorgungsmodul, das elektrische Energie verbrauchende Einheiten des Automatisierungsgerätes mit elektrischer Energie versorgt. Ferner betrifft die Erfindung ein Codeinspektionsprogramm, welches für einen Einsatz in einem derartigen Automatisierungsgerät geeignet ist.

Ein aus dem Siemens-Katalog ST 70, Kapitel 1, Ausgabe 2007 bekanntes Automatisierungsgerät setzt sich aus einzelnen Einheiten, nämlich aus Bauteilen oder aus Baugruppen, zusammen. Verschiedene Systeme sind dabei auch im Betrieb erweiterbar, so dass Einheiten zugefügt, insbesondere in dafür vorgesehene Steckplätze gesteckt, werden können, ohne dass das Gesamtsystem ausgeschaltet oder heruntergefahren werden muss. Ein Ausschalten des Systems wäre gerade im Bereich der Prozessautomatisierung und insbesondere im Bereich der Anlagensteuerung sehr problematisch, da derartige Ausfallzeiten naturgemäß unmittelbar zu Produktionsstillständen führen. Um ein derartiges System erweitern zu können, sind Maßnahmen vorgesehen, welche das Risiko von Überlast-Fällen beim Zufügen von Einheiten und/oder eine Überdimensionierung der Stromversorgung des Systems verringern oder vermeiden.

Aus der DE 10 2005 039 886 A1 ist ein modulares System bekannt, das ein Hauptmodul und mehrere daran anschließbare Einzelmodule sowie ein das System mit Spannung versorgendes Netzteil aufweist. Jedes Einzelmodul ist mit mindestens einem Deskriptorelement versehen, welches einen nicht vom tatsächlichen Betrieb des jeweiligen Einzelmoduls abhängenden Leistungsbedarf des Einzelmoduls kodiert oder wiedergibt. Das Hauptmodul liest die Deskriptorelemente der angeschlossenen Einzelmodule aus und ermittelt daraus zur Verhinderung einer Netzteilüberlastung den nicht vom tatsächlichen Betrieb des Systems abhängenden Gesamtleistungsbedarf aller angeschlossenen Einheiten. Maßnahmen zur Einsparung von Energie sind nicht vorgesehen.

Die Veröffentlichung von Nicholson K. E. et al. "Cost Effective Strategies for Industrial Electric Power Management Systemes", PETROLEUM AND CHEMICAL INDUSTRY CONFERENCE, 1998, Industry Application S Society 45th Annual Indianapolis, IN, USA, 28. - 30. September 1998, XP010312461, ISBN: 978-0-7803-4897-4, Seiten 223 - 233 beschreibt Energiemanagementsysteme für die Verteilung und Nutzung elektrischer Leistung, wobei Nutzen, Funktionalität und Kosten dieser Systeme verglichen werden.

Ein Verfahren gemäß dem Oberbegriff des Anspruchs 1 sowie ein Automatisierungssystem gemäß dem Oberbegriff des Anspruchs 4 sind aus der WO 2007/037609 A1 bekannt.

Der vorliegenden Erfindung liegt die Aufgabe zugrunde, ein Verfahren der eingangs genannten Art im Hinblick auf eine Energie-Verbrauchsoptimierung zu verbessern. Darüber hinaus ist ein Automatisierungsgerät mit verbesserter Energie-Verbrauchsoptimierung zu schaffen. Ferner ist ein Codeinspektionsprogramm anzugeben, welches für ein derartiges Automatisierung.sgerät geeignet ist.

Im Hinblick auf das Verfahren wird diese Aufgabe durch die im kennzeichnenden Teil des Anspruchs 1, im Hinblick auf das Automatisierungsgerät durch die im kennzeichnenden Teil des Anspruchs 4 und im Hinblick auf das Codeinspektionsprogramm durch die im kennzeichnenden Teil des Anspruchs 7 angegebenen Maßnahmen gelöst.

Vorteilhaft ist, dass im Rahmen des Steuerbetriebs eine Energieverbrauchsoptimierung verwirklicht wird, wobei gewährleistet ist, dass die erforderlichen Automatisierungsfunktionen zur Steuerung des technischen Prozesses aufrechterhalten bleiben.

Es genügt, das Stromversorgungsmodul nicht auf einen maximalen Gesamtenergiebedarf auszulegen, sondern nur auf einen mittleren Gesamtenergiebedarf; denn dadurch, dass der Energieverbrauch im Rahmen des Steuerbetriebs ständig optimiert wird, während dessen manche Einheit zeitweise sogar abgeschaltet werden kann, braucht der maximale Gesamtenergiebedarf nicht bereitgestellt zu werden. Auf ein überdimensioniertes Stromversorgungsmodul kann daher verzichtet und es können Kosten eingespart werden. Darüber hinaus nehmen Stromversorgungsmodule umso mehr Raum in Anspruch, desto höher ihre Leistung ist.

In einer Ausgestaltung der Erfindung ist als Kriterium die Dauer zur Verwirklichung einer Automatisierungsfunktion oder der zeitliche Abstand der Aktivierung dieser Automatisierungsfunktion vorgesehen. Beispielsweise wird einem Sensor nach der Übermittlung eines von diesem Sensor erfassten Messwertes für bestimmte Zeiträume keine Energie zugeführt, weil weitere Messwerte während diesen Zeiträumen nicht gebraucht werden bzw. nicht ausgewertet werden müssen.
Ein weiteres Kriterium können z. B. die Stillstandszeiten eines Elektromotors sein, während deren dem Motor keine Energie zugeführt werden braucht. Ferner sind energierelevante und maschinell auswertbare Produktdaten (Produktmerkmale) der Einheiten, wie beispielsweise Abkühlverluste von Heizungen oder Kennlinien von Motoren, als Kriterien zum optimalen Zu- bzw. Abschalten der Energiezufuhr geeignet.

Weitere vorteilhafte Ausgestaltungen der Erfindung ergeben sich aus den weiteren Unteransprüchen.

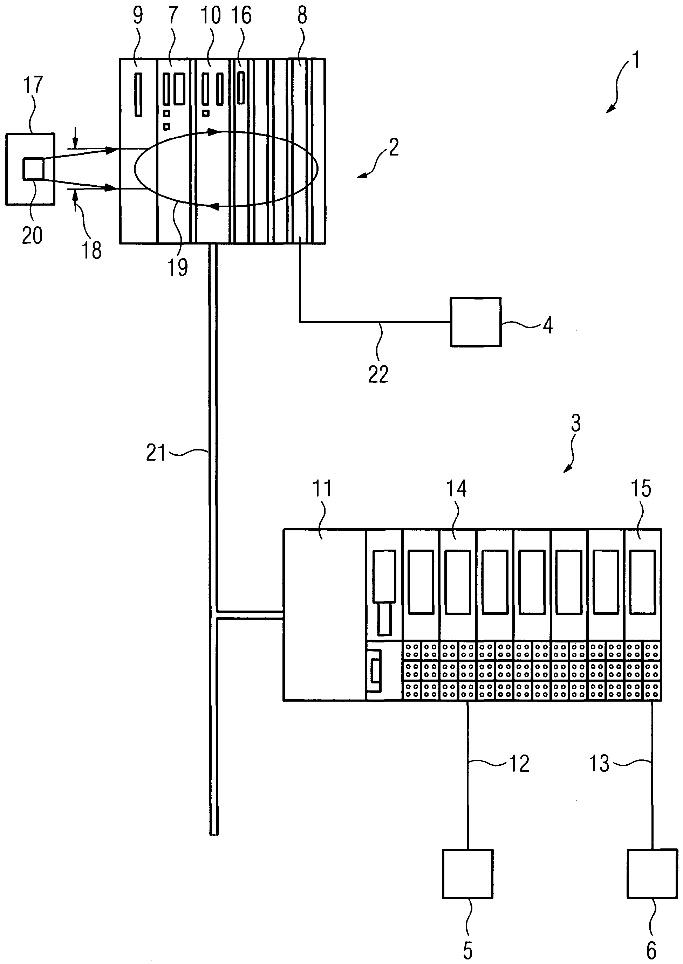

Die Erfindung wird nachfolgend anhand eines Ausführungsbeispiels unter Bezugnahme auf die einzige Figur der Zeichnung näher erläutert. Die Figur der Zeichnung zeigt Bestandteile eines Automatisierungssystems.

Mit 1 ist ein Automatisierungssystem bezeichnet, welches ein mit einer CPU-Baugruppe 7 versehenes Automatisierungsgerät 2, ein dezentrales Peripheriegerät 3 und mehrere Feldgeräte 4, 5, 6 aufweist. Das Automatisierungsgerät 2 weist weitere über einen hier nicht dargestellten Rückwandbus mit der CPU-Baugruppe 7 verbundene Baugruppen auf, z. B. Baugruppen in Form einer Temperatur-Regler-Baugruppe 8, einer Stromversorgungs-Baugruppe 9, einer Master-Baugruppe 10 sowie weiterer Ein-/Ausgabe- und/oder sonstiger Funktions-Baugruppen. Die CPU-Baugruppe 7 des Automatisierungsgerätes 2 arbeitet zyklisch ein Programm zum Steuern eines technischen Prozesses ab. Selbstverständlich kann das Automatisierungssystem 1 je nach einer zu lösenden Steuerungsaufgabe mit weiteren Automatisierungsgeräten und/oder dezentralen Peripheriegeräten versehen sein. Darüber hinaus kann das Automatisierungssystem 1 über einen hier nicht dargestellten Bus mit Engineering-Systemen, Bedien- und Beobachtungssystemen, Asset-Management-Systemen und/oder für ein Prozessleitsystem geeigneten Servern verbunden sein. Das Automatisierungsgerät 2 ist über die Master-Baugruppe 10 und über einen für hohe Kommunikationsgeschwindigkeiten ausgelegten Feldbus 21, z. B. in Form eines an sich bekannten Feldbusses "PROFIBUS DP", an das dezentrale Peripheriegerät 3 angeschlossen, welches ebenfalls mit einer Stromversorgungs-Baugruppe 11 versehen ist. Mit jeweils weiteren für die Prozessautomatisierung geeigneten Kommunikationsverbindungen 12, 13 sind die Feldgeräte 5, 6 an Module 14, 15 des dezentralen Peripheriegerätes 3 angeschlossen.

Im Folgenden wird angenommen, dass lediglich drei Prozesse zu steuern sind und dass das an die Temperatur-Regler-Baugruppe 8 über eine geeignete Kommunikationsverbindung 22 angeschlossene Feldgerät 4 ein Temperatursensor ist, welcher die Temperatur eines Heizkessels erfasst, wobei die Temperatur-Regler-Baugruppe 8 ein hier nicht dargestelltes separates Leistungsteil zur Energieversorgung des Heizkessels ansteuert. Darüber hinaus ist angenommen, dass das Modul 15 eine Positionier-Baugruppe und das Feldgerät 5 ein Positionsgeber ist, der die Position eines Schrittmotors erfasst, und dass das Modul 15 eine Digitalein-/ausgabe-Baugruppe und das Feldgerät 6 ein Bildverarbeitungs-Sensor zur Verwirklichung von farblichen Prüfungsaufgaben in der Montagetechnik ist.

Die Stromversorgungs-Baugruppe 9 versorgt die Baugruppen 7, ... des Automatisierungsgerätes 2 und die Stromversorgungs-Baugruppe 11 die Baugruppen 14, ... des dezentralen Peripheriegerätes 3 mit elektrischer Energie, wobei im vorliegenden Ausführungsbeispiel die Stromversorgungs-Baugruppen 9, 11 so ausgelegt sind, dass diese auch die jeweiligen Feldgeräte 4, 5, 6 mit Energie versorgen. In zeitlichen Abständen übermitteln die Feldgeräte 4, 5, 6, die Baugruppen 7 ... 10, 14, 15 des Automatisierungsgerätes 2 und des dezentralen Peripheriegerätes 3 einer Auswerte-Baugruppe 16 des Automatisierungsgerätes 2 ihre energierelevanten Daten. Aufgrund dieser Daten und der Kenntnis der zu steuernden Prozesse im Hinblick auf die Temperatursteuerung des Heizkessels, der Schrittmotorsteuerung und der Bildauswertung ermittelt die Auswerte-Baugruppe 16 wann, wie lange und in welchen Zyklen die Prozesse gesteuert werden müssen, wie viel Energie für diese Prozesse bereitzustellen ist und ob es für Stillstandszeiten energetisch sinnvoll ist, Prozesse ganz abzuschalten. Es kann z. B. sinnvoll sein, die Heizung zum Aufheizen des Kessels nicht ganz abzuschalten, weil der Energiebedarf zum Aufheizen eines zu stark abgekühlten Kessels höher ist als die Energie, die erforderlich ist, um während einer "Ruhephase" den Kessel auf einer geringen Temperatur zu halten und erst bei Bedarf die Temperatur dann auf die erforderliche Betriebstemperatur zu erhöhen. Mit anderen Worten: die Auswerte-Baugruppe 16, deren Funktion selbstverständlich auch die CPU-Baugruppe 7 übernehmen kann, ermittelt in zeitlichen Abständen oder zu vorgebbaren Zeiten den aktuellen Gesamtenergiebedarf des Automatisierungssystems 1. Die Auswerte-Baugruppe 16 weist ein Codeinspektionsprogramm 17 auf, welches aufgrund des ermittelten aktuellen Gesamtenergiebedarfs des Automatisierungssystems 1 während eines Zeitintervalls 18 eines Zyklus 19 des Steuerprogramms Anweisungen 20 einfügt. Im Rahmen der Bearbeitung dieser Anweisung im folgenden Steuerprogrammzyklus übermittelt die CPU-Baugruppe 7 der Stromversorgungs-Baugruppe 9 des Automatisierungsgerätes 2 über dessen Rückwandbus und der Stromversorgungs-Baugruppe 11 des dezentralen Peripheriegerätes 3 über den Bus 21 ein Steuersignal, welches diesen Stromversorgungs-Baugruppen 9, 11 den aktuellen Gesamtenergiebedarf anzeigt. Ferner schaltet die CPU-Baugruppe 7 mittels eines geeigneten Steuersignals die Baugruppen des Automatisierungsgerätes 2 und/oder die Baugruppen des dezentralen Peripheriegerätes 3 ab, welche zur Steuerung der Prozesse nicht mehr benötigt werden, oder schaltet diese in einen Energiesparmodus. Für den Fall, dass z. B. ein Aufheizen des Heizkessels nicht mehr erforderlich ist und dieser abgeschaltet werden kann und ferner der Bildverarbeitungs-Sensor 6 nicht mehr gebraucht wird, übermittelt die CPU-Baugruppe 7 der Temperatur-Regler-Baugruppe 8 des Automatisierungsgerätes 2 ein Steuersignal, aufgrund dessen die Temperatur-Regler-Baugruppe 8 das separate Leistungsteil zur Energieversorgung des Heizkessels abschaltet und aufgrund dessen die Temperatur-Regler-Baugruppe 8 nach dem Abschalten des Leistungsteils sich ausschaltet. Ferner übermittelt die CPU-Baugruppe 7 der Digitalein-/ausgabe-Baugruppe 15 des dezentralen Peripheriegerätes 3 ein Steuersignal zum Abschalten des Bildverarbeitungs-Sensors 6, wobei auch hier vorgesehen sein kann, dass zusätzlich aufgrund dieses Steuersignals die Digitalein-/ausgabe-Baugruppe 15 ausgeschaltet wird.

## Patentansprüche

1. Verfahren zum Betreiben eines Automatisierungssystems (1), dessen CPU-Einheit (7) zur Abarbeitung eines Steuerprogramms zum Steuern eines technischen Prozesses vorgesehen ist und dessen Stromversorgungsmodul (9, 11) elektrische Energie verbrauchende Einheiten (7, 8, 10, 16; 14, 15) mit elektrischer Energie versorgt, **dadurch gekennzeichnet, dass**
- einer Auswerteeinheit (8) mindestens ein Kriterium der jeweiligen Einheiten (7, 8, 10, 16; 14, 15) angezeigt wird,
- durch die Auswerteeinheit (8) aufgrund dieser Kriterien ein aktueller Gesamtenergiebedarf ermittelt wird,
- durch die Auswerteeinheit (8) automatisch mindestens eine den aktuellen Gesamtenergiebedarf repräsentierende Programmanweisung in das Steuerprogramm eingefügt oder mindestens eine Programmanweisung des Steuerprogramms angepasst wird, aufgrund dessen die elektrische Energieversorgung für die Einheiten (7, 8, 10, 16; 14, 15) während des Steuerbetriebs gemäß dem aktuellen Gesamtenergiebedarf eingestellt wird.

2. Verfahren nach Anspruch 1, **dadurch gekennzeichnet, dass** das mindestens eine Kriterium die Dauer zur Verwirklichung einer Automatisierungsfunktion und/oder der zeitliche Abstand der Aktivierung dieser Automatisierungsfunktion ist.

3. Verfahren nach Anspruch 1 oder 2, **dadurch gekennzeichnet, dass** durch die Auswerteeinheit (8) die Kriterien in zeitlichen Abständen abgefragt werden.

4. Automatisierungssystem mit einer CPU-Einheit (7) zur Abarbeitung eines Steuerprogramms zum Steuern eines technischen Prozesses und mit einem Stromversorgungsmodul (7, 11), das elektrische Energie verbrauchende Einheiten (7, 8, 10, 16; 14, 15) des Automatisierungssystems (1) mit elektrischer Energie versorgt, **dadurch gekennzeichnet, dass**
- die Einheiten (7, 8, 10, 16; 14, 15) einer Auswerteeinheit (8) oder der CPU-Einheit (7) des Automatisierungssystems (1) mindestens ein Kriterium anzeigen,
- die Auswerteeinheit (8) aufgrund dieses Kriteriums einen aktuellen Gesamtenergiebedarf ermittelt und eine den aktuellen Gesamtenergiebedarf repräsentierende Programmanweisung in das Steuerprogramm einfügt oder eine Programmanweisung des Steuerprogramms anpasst,
- die CPU-Einheit (7) dem Stromversorgungsmodul (7, 11) ein Signal übermittelt, aufgrund dessen das Stromversorgungsmodul (7, 11) die elektrische Energieversorgung für die Einheiten (7, 8, 10, 16; 14, 15) während des Steuerbetriebs gemäß dem aktuellen Gesamtenergiebedarf einstellt.

5. Automatisierungssystem nach Anspruch 4, **dadurch gekennzeichnet, dass** das mindestens eine Kriterium die Dauer zur Verwirklichung einer Automatisierungsfunktion und/oder der zeitliche Abstand der Aktivierung dieser Automatisierungsfunktion ist.

6. Automatisierungssystem nach Anspruch 4 oder 5, **dadurch gekennzeichnet, dass** die Auswerteeinheit (8) die Kriterien in zeitlichen Abständen abfragt.

7. Codeinspektionsprogramm zur Durchführung des Verfahrens nach einem der Ansprüche 1 bis 3.

## Claims

1. Method for operating an automation system (1), the CPU (7) of which is provided for processing a control program for controlling a technical process, and the power supply module (9, 11) of which supplies units (7, 8, 10, 16; 14, 15) that consume electrical energy with electrical energy, **characterised in that**
- at least one criterion of the respective units (7, 8, 10, 16; 14, 15) is displayed to an analysis unit (8),
- a current overall energy requirement is determined by the analysis unit (8) on the basis of these criteria,
- at least one program instruction representing the current overall energy requirement is automatically inserted into the control program by the analysis unit (8), or at least one program instruction of the control program is adapted, on the basis of which the electrical energy supply for the units (7, 8, 10, 16; 14, 15) is adjusted in accordance with the current overall energy requirement during the control operation.

2. Method according to claim 1, **characterised in that** the at least one criterion is the time taken to effect an automation function and/or the time interval for activation of this automation function.

3. Method according to claim 1 or 2, **characterised in that** the criteria are interrogated at time intervals by the analysis unit (8).

4. Automation system having a CPU (7) for processing a control program for controlling a technical process and having a power supply module (7, 11) which supplies units (7, 8, 10, 16; 14, 15) of the automation system (1) that consume electrical energy with electrical energy, **characterised in that**
- the units (7, 8, 10, 16; 14, 15) display at least one criterion to an analysis unit (8) or to the CPU (7) of the automation system (1),
- the analysis unit (8) determines a current overall energy requirement on the basis of this criterion and inserts a program instruction representing the current overall energy requirement into the control program or adjusts a program instruction of the control program,
- the CPU (7) sends the power supply module (7, 11) a signal, on the basis of which the power supply module (7, 11) adjusts the electrical energy supply for the units (7, 8, 10, 16; 14, 15) during the control operation in accordance with the current overall energy requirement.

5. Automation system according to claim 4, **characterised in that** the at least one criterion is the time taken to effect an automation function and/or the time interval for activation of this automation function.

6. Automation system according to claim 4 or 5, **characterised in that** the analysis unit (8) interrogates the criteria at time intervals.

7. Code inspection program for the performance of the method according to one of claims 1 to 3.

## Revendications

1. Procédé pour faire fonctionner un système (1) d'automatisation, dont l'unité (7) CPU est prévue pour le traitement d'un programme de commande d'un processus technique et dont le module (9, 11) d'alimentation en courant alimente en énergie électrique des unités (7, 8, 10, 16 ; 14, 15) consommant de l'énergie électrique, **caractérisé en ce que**
- on indique à une unité (8) d'exploitation au moins un critère des unités (7, 8, 10, 16 ; 14, 15) respectives,
- on détermine, par l'unité (8) d'exploitation, sur la base de ces critères, un besoin d'énergie total instantané,
- par l'unité (8) d'exploitation, automatiquement on introduit dans le programme de commande une instruction de programme représentant le besoin d'énergie total instantané ou on adapte au moins une instruction du programme de commande sur la base duquel l'alimentation en énergie électrique des unités (7, 8, 10, 16 ; 14, 15) est réglée pendant le fonctionnement en commande, en fonction du besoin d'énergie total instantané.

2. Procédé suivant la revendication 1, caractérisé en qu'au moins un critère est la durée de réalisation d'une fonction d'automatisation et/ou l'intervalle de temps de l'activation de cette fonction d'automatisation.

3. Procédé suivant la revendication 1 ou 2, **caractérisé en ce que** l'on demande à des intervalles de temps les critères par l'unité (8) d'exploitation.

4. Système d'automatisation comprenant une unité (7) CPU de traitement d'un programme de commande d'un processus technique et comprenant un module (7, 11) d'alimentation en courant, qui alimente en énergie électrique des unités (7, 8, 10, 16 ; 14, 15) consommant de l'énergie électrique du système (1) d'automatisation, **caractérisé en ce que**
- les unités (7, 8, 10, 16 ; 14, 15) indiquent au moins un critère à une unité (8) d'exploitation ou à l'unité (7) CPU du système (1) d'automatisation,
- l'unité (8) d'exploitation détermine, sur la base de ce critère, un besoin d'énergie total instantané et insère dans le programme de commande une instruction de programme représentant le besoin d'énergie total instantané ou adapte une instruction du programme de commande,
- l'unité (7) CPU transmet au module (7, 11) d'alimentation en courant un signal sur la base duquel le module (7, 11) d'alimentation en courant règle l'alimentation en énergie électrique des unités (7, 8, 10, 16 ; 14, 15) pendant le fonctionnement de commande en fonction du besoin d'énergie total instantané.

5. Système d'automatisation suivant la revendication 4, **caractérisé en ce qu'**au moins un critère est la durée de réalisation d'une fonction d'automatisation et/ou l'intervalle de temps de l'activation de cette fonction d'automatisation.

6. Système d'automatisation suivant la revendication 4 ou 5, **caractérisé en ce que** l'unité (8) d'exploitation demande les critères à des intervalles de temps.

7. Programme d'inspection de code pour effectuer le procédé suivant l'une des revendications 1 à 3.
